# EUROPÄISCHE PATENTSCHRIFT

(11) **EP 1 662 261 B1**
(45) Veröffentlichungstag und Bekanntmachung des Hinweises auf die Patenterteilung: **09.04.2008**
(21) Anmeldenummer: 04027974.7
(22) Anmeldetag: 25.11.2004
(51) Int. Cl.: G01N 35/00

(54) **Vorrichtung zum Analysieren von Proben**
Device for analysis of samples
Dispositif d'analyse d'échantillons

(43) Veröffentlichungstag der Anmeldung: 31.05.2006
(73) Patentinhaber: Roche Diagnostics GmbH, 68305 Mannheim (DE); F. Hoffmann-La Roche AG, 4070 Basle (CH)
(72) Erfinder: Juch, Mathias, 6340 Baar (CH); Burkhardt, Claudius, 6004 Luzern (CH); Schacher, Gottlieb, 6010 Kriens (CH); Schwerzmann, Leo, 6044 Udligenswil (CH)
(74) Vertreter: Troesch Scheidegger Werner AG

(56) Entgegenhaltungen:
- EP-A- 0 994 355
- WO-A-02/08769
- WO-A-99/28724
- DE-A1- 19 835 071
- FR-A- 2 655 151
- US-A- 4 066 412
- US-A- 4 113 436
- US-A- 4 818 493
- US-A- 6 141 602

## Beschreibung

Die vorliegende Erfindung betrifft eine Vorrichtung zum Analysieren von Proben.

Automatische Probenanalysegeräte, mit denen beispielsweise eine Quantifizierung der Konzentration einer in einer flüssigen Probe aufgelösten Substanz oder die Analyse von Komponenten biologischer Flüssigkeiten, Wasser oder dergleichen durchgeführt werden, sind bekannt. So ist beispielsweise in der deutschen Patentschrift mit der Veröffentlichungsnummer DE 198 49 591 C2 ein automatisches Analysegerät beschrieben, bei dem Proben in Probengefässen bereitgestellt werden, damit eine Pipettiervorrichtung eine vorgegebene Probenmenge in Reaktionsgefässe übertragen kann. In den Reaktionsgefässen werden nach Zugabe von Reagenzien physikalische Eigenschaften der Probe mit einer Messvorrichtung gemessen. Nach Abschluss der Messung werden die Reaktionsgefässe gereinigt und für die nächste Probenaufnahme mit anschliessender Messung bereitgestellt. Dabei erweist sich der Reinigungsvorgang als überaus aufwendig und benötigt einen grossen Aufwand an Ressourcen, was unerwünscht ist.

Analysegeräte mit modularem Aufbau sind im Stand der Technik bekannt. Aus den schriften FR 2 655 151 A und EP 0 994 355 A sind zum Beispiel Geräte bekannt, wobei Module, jeweils mit einer einzigen Funktion (Pipette, Reagenzdosierer, Zentrifuge, usw.) entlang einer Transportkette aufgestellt sind. Es sind auch, zum Beispiel aus DE 198 35 071 A, Systeme bekannt wobei jedes Modul als selbstständige Analysevorrichtung ausgeführt ist, und das Transportsystem lediglich zur Probenverteilung dient.

Der vorliegenden Erfindung liegt daher die Aufgabe zugrunde, eine Vorrichtung zum Analysieren von Proben anzugeben, die die vorstehend genannten Nachteile nicht aufweist.

Diese Aufgabe wird durch die im kennzeichnenden Teil von Anspruch 1 aufgeführten Merkmale gelöst. Vorteilhafte Ausgestaltungen der Erfindung sind in weiteren abhängigen Ansprüchen angegeben.

Die Erfindung weist die folgenden Vorteile auf: Indem eine Zentraleinheit mit Reaktionsgefässen, eine Transporteinheit zum Transportieren der Reaktionsgefässe und mindestens eine analytische Einheit vorgesehen sind, indem des Weiteren die Zentraleinheit eine Probenentnahmeeinheit enthält, mit der zumindest ein Teil der Probe aus einem Probengefäss in ein Reaktionsgefäss überführt wird, indem ferner zumindest ein Teil der Reaktionsgefässe über die Transporteinheit an mindestens eine der analytischen Einheiten übertragbar ist, indem mindestens ein Reagenzbehälter mit mindestens einem Reagenz vorgesehen ist, das zur Probe im Reaktionsgefäss für eine Reaktion zwischen der Probe und dem Reagenz zuführbar ist, und indem schliesslich mindestens eine Messvorrichtung oder mindestens eine Messeinheit zum Messen einer physikalischen Eigenschaft der Probe vorgesehen ist, wird eine Analyseeinheit geschaffen, die äusserst effizient arbeitet, dabei einen minimalen Ressourcenaufwand benötigt. Von besonderem Vorteil ist dabei der modulare Aufbau der Analyseeinheit, der einen Ausbau der Analysekapazität nach Bedarf ermöglicht. Der modulare Aufbau resultiert zudem in einer einfacheren Wartung der gesamten Analyseeinheit, können doch defekte Einheiten einfach durch neue ersetzt werden.

Die vorliegende Erfindung wird im Folgenden anhand von Ausführungsbeispielen, welche in Zeichnungen dargestellt sind, weiter erläutert. Dabei zeigen:
- Fig. 1,: in schematischer Darstellung, ein Blockschaltbild der erfindungsgemässen Vorrichtung zum Analysieren von Proben,
- Fig. 2: eine erste konkrete Ausführungsform der erfindungsgemässen Vorrichtung in perspektivischer Darstellung,
- Fig. 3: eine zweite konkrete Ausführungsform der erfindungsgemässen Vorrichtung in perspektivischer Darstellung,
- Fig. 4: eine dritte konkrete Ausführungsform der erfindungsgemässen Vorrichtung in perspektivischer Darstellung und
- Fig. 5: eine vierte konkrete Ausführungsform der erfindungsgemässen Vorrichtung in perspektivischer Darstellung.

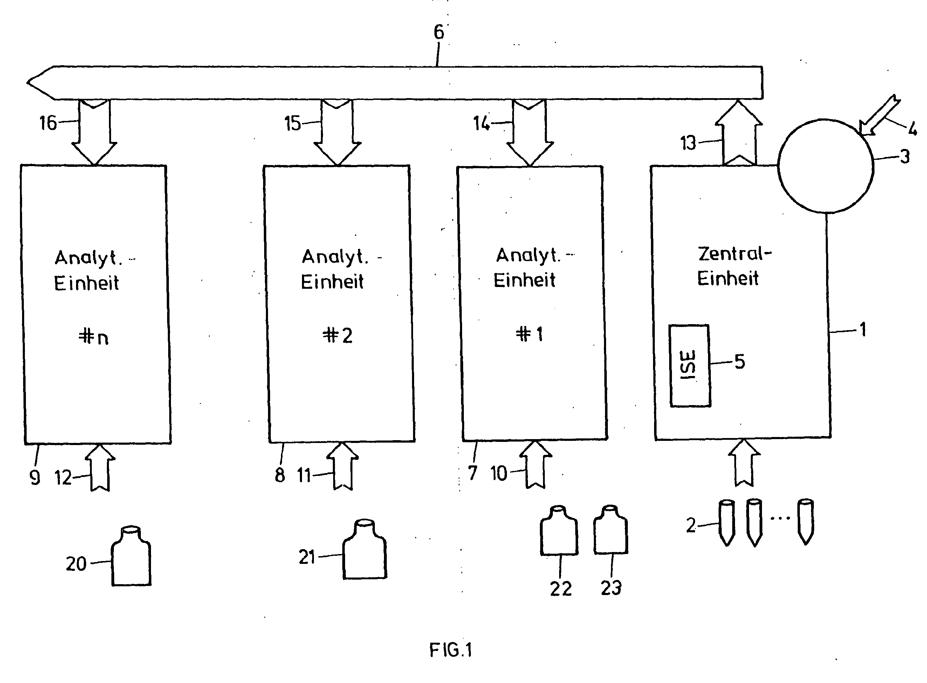

Fig. 1 zeigt ein vereinfachtes Blockschaltbild der erfindungsgemässen Vorrichtung, bestehend aus einer Zentraleinheit 1 und mehreren analytischen Einheiten 7, 8 und 9, die mit den fortlaufenden Nummern #1, #2, ..., #n zur Verdeutlichung einer beliebigen Anzahl von analytischen Einheiten gekennzeichnet sind. Zu untersuchende Proben werden in Probengefässen 2 in die Zentraleinheit 1 übergeben. Denkbar ist dabei auch, dass sowohl einzelne Probengefässe 2 als auch mehrere Probengefässe 2, vorzugsweise in Kassetten, an die Zentraleinheit 1 übergeben werden. In der Zentraleinheit 1 wird jeweils eine vorgegebene Probenmenge mit Hilfe einer Probenentnahmeeinheit (in Fig. 1 nicht dargestellt), die beispielsweise eine Pipettiervorrichtung ist, dem jeweiligen Probengefäss 2 entnommen und in ein Reaktionsgefäss (nicht dargestellt) abgefüllt. Die Reaktionsgefässe werden vor dem Befüllen mit der vorgegebenen Probenmenge durch eine Vereinzelungseinheit 3, beispielsweise in Form eines Schütteltrichters, bereitgestellt, in dem Orientierung und Lage der noch leeren Reaktionsgefässe klar definiert werden. Nachdem die gewünschte Menge einer Probe, gegebenenfalls unter Zugabe von Wasser, in ein Reaktionsgefäss abgefüllt worden ist, wird dieses an eine Transporteinheit 6 mittels einer Zuführvorrichtung 13 übergeben. Die Transporteinheit 6 ist eine unidirektionale Transporteinrichtung für die Reaktionsgefässe, wobei beispielsweise eine oder mehrere der folgenden Technologien bei der Realisierung zum Einsatz kommen:
- Förderband;
- Schüttelstrecke;
- Führungsschienen mit Mitnahmeriemen.

Je nach Destination der Reaktionsgefässe werden diese mit Hilfe von Entnahmevorrichtungen 14 bis 16 von der Transporteinheit 6 übernommen und in die jeweilige analytische Einheit 7, 8 oder 9 eingeschleust, in der die Reaktionsgefässe für eine Analyse vorbereitet werden. Die Vorbereitung besteht zum Beispiel darin, dass ein oder mehrere Reagenzien zur Auslösung einer Reaktion in das jeweilige Reaktionsgefäss eingebracht wird, oder es wird, um ein weiteres Beispiel zu nennen, die Probe im Reaktionsgefäss auf eine vorgegebene Temperatur erwärmt. Im Anschluss an diese vorbereitenden Massnahmen werden die physikalischen und/oder chemischen Eigenschaften während oder nach einer im jeweiligen Reaktionsgefäss stattfindenden Reaktion gemessen, wozu in der analytischen Einheit 7, 8 oder 9 eine oder mehrere Messeinheiten (in Fig. 1 nicht dargestellt) vorgesehen sind. Mit Hilfe der bzw. den Messeinheiten können beispielsweise eine oder mehrere der folgenden Eigenschaften der in den Reaktionsgefässen vorhanden Proben bestimmt werden:
- optische Eigenschaften, wie Absorption;
- Trübung (Turbidimetrie);
- Absorptionsspektrum in einem bestimmten Wellenlängenbereich;
- sekundäre Fluoreszenzemission;
- Polarisation der Fluoreszenzemission.

Wie aus dem schematischen Blockschaltbild gemäss Fig. 1 weiter ersichtlich ist, werden die Probengefässe 2 ausschliesslich der Zentraleinheit 1 übergeben, während die Reagenzienbehälter 20 bis 23 den analytischen Einheiten 7 bis 9 zugeführt werden. Dies ist eine Konsequenz des modularen und ausbaufähigen Analysegerätes gemäss der vorliegenden Erfindung. Es wird jedoch ausdrücklich darauf hingewiesen, dass Ausführungsformen vorgesehen sind, bei denen beispielsweise auch in der Zentraleinheit 1 Reagenzien benötigt werden. So ist zum Beispiel vorgesehen, Ionen-Selektive-Messungen (ISE oder "Ion Selective Electrode") in einer mit 5 gekennzeichneten Messvorrichtung durchzuführen. Mit diesen Messungen werden beispielsweise Blutelektrolyt-Konzentrationen gemessen. Damit besteht die Möglichkeit, dass die erfindungsgemässe Vorrichtung bei ISE-Messungen eingesetzt werden kann, ohne dass analytische Einheiten vorhanden sein müssen. Mithin besteht die Möglichkeit, dass Endbenutzer, die das Analysegerät lediglich für ISE-Messungen verwenden, keine zusätzlichen Module in Form von analytischen Einheiten anschaffen müssen, zu einem späteren Zeitpunkt aber trotzdem die Möglichkeit haben, das Analysegerät unter Verwendung von analytischen Einheiten auszubauen.

Zur Steuerung der erfindungsgemässen Vorrichtung ist zum Beispiel in der Zentraleinheit 1 eine Kontrolleinheit (in Fig. 1 nicht dargestellt), oder es ist eine Kontrolleinheit an die Zentraleinheit 1 anschliessbar. Bei der letztgenannten Ausführungsform kann beispielsweise ein handelsüblicher Personalcomputer verwendet werden. In der Kontrolleinheit werden die Steuerbefehle für die einzelnen Systemkomponenten generiert bzw. es werden Rückmeldungen der Systemkomponenten interpretiert und ausgewertet. So werden insbesondere auch die Position der einzelnen Reaktionsgefässe und die in diesen enthaltenen Proben in der Kontrolleinheit festgehalten.

In einer weiteren Ausführungsform der erfindungsgemässen Vorrichtung ist es vorgesehen, die Reaktionsgefässe mit einem Label zur eindeutigen Identifikation zu versehen, das mit einer Identifikationseinheit maschinell gelesen werden kann. Die Identifikationseinheiten werden an notwendigen Positionen in der Zentraleinheit als auch in der bzw. den analytischen Einheiten eingesetzt. In der Kontrolleinheit werden die durch die Identifikationseinheiten eingelesenen Daten mit weiteren Informationen - wie Probeninhalt, verabreichte Reagenzien, durchzuführende Messung, usw. - in einer Datenbank in Beziehung gebracht. Zur Identifikation bzw. maschinellen Einlesen der Daten eignet sich beispielsweise eine der folgenden Techniken:
- ein- oder mehrdimensionale Strichcode;
- andere optische Verfahren;
- Transponder;
- Markierungsmoleküle in der Flüssigkeit.

Die einmal verwendeten Reaktionsgefässe können nach einer gründlichen Reinigung wiederum verwendet werden. Es hat sich jedoch gezeigt, dass eine einmalige Verwendung der Reaktionsgefässe einen geringeren Ressourcenbedarf (z.B. Reinigungsmittel, Wasser, etc.) zur Folge hat. In einer bevorzugten Ausführungsform der erfindungsgemässen Vorrichtung werden daher so genannte Einwegreaktionsgefässe eingesetzt. Damit wird der Aufbau der erfindungsgemässen Vorrichtung vereinfacht. So sind keine Reinigungsvorgänge in den analytischen Einheiten erforderlich. Die Reinigungsvorgänge in der Zentraleinheit sind reduziert auf die Reinigung der Probenentnahmeeinheit, mit der eine bestimmte Probenmenge einem Probengefäss entnommen wird und in ein Reaktionsgefäss abgefüllt wird und daher zwischen den Probenentnahmen gereinigt werden muss, um eine Kontamination durch Übertragung von einer Probe auf eine andere zu vermeiden. Daraus folgt, dass die analytischen Einheiten keine Reinigungsvorrichtungen benötigen und damit insbesondere nicht mit Wasser versorgt werden müssen. Somit muss lediglich die Zentraleinheit 1 mit einem Wasseranschluss versehen sein.

In einer weiteren Ausführungsform der vorliegenden Erfindung ist vorgesehen, dass die Transporteinheit 6 die Reaktionsgefässe nicht nur in einer Richtung transportiert, sondern die Reaktionsgefässe nach Abschluss einer Analyse zurück zur Zentraleinheit 1 transportiert werden. Bei einer solchen Ausführungsform ist anstelle der Vereinzelungseinheit 3 eine Reinigungsstation vorzusehen, in der die Reaktionsgefässe gereinigt werden und für eine erneute Verwendung vorbereitet werden.

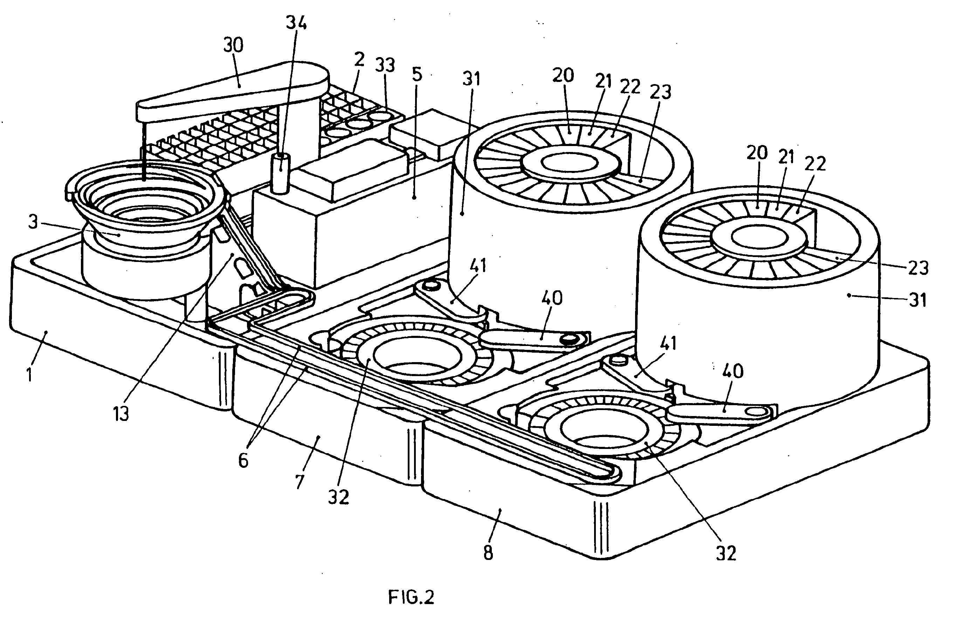

Fig. 2 zeigt eine erste konkrete Ausführungsvariante einer erfindungsgemässen Vorrichtung. Mit 1 sind wiederum eine Zentraleinheit und mit 7 und 8 zwei analytische Einheiten bezeichnet. Die Zentraleinheit 1 weist eine Vereinzelungseinheit 3 auf, welche die Reaktionsgefässe mit Hilfe eines vibrierenden Schütteltrichters in eine definierte Position bringt. Bevor die Reaktionsgefässe der Transporteinheit 6 übergeben werden, wird eine definierte Probenmenge in dasjenige Reaktionsgefäss eingefüllt, das sich an vorderster Stelle, d.h. unmittelbar vor der Übergabeeinheit 13, befindet. Im Anschluss an die Probenübergabe wird das Reaktionsgefäss der Transporteinheit 6 übergeben und in eine der analytischen Einheiten 7 oder 8 übergeben.

Das Abfüllen der definierten Probenmenge in das Reaktionsgefäss erfolgt mit Hilfe einer Probenentnahmeeinheit 30, die als Pipettiervorrichtung ausgebildet ist und die aus den Probengefässen die vordefinierte Probenmenge entnimmt. Zwischen den einzelnen Probenentnahmen muss die Probenentnahmeeinheit 30 bzw. die Pipettiernadel gereinigt werden, damit keine Kontamination der nachfolgenden Proben mit Probenanteilen aus früher verarbeiteten Proben erfolgen kann. Für die Reinigung ist eine Reinigungseinheit (in Fig. 2 nicht dargestellt) vorgesehen, die beispielsweise aus mehreren Spüleinrichtungen zum Spülen der Pipettiernadel ausgestattet ist. Damit die Pipettiernadel die verschiedenen Positionen erreichen kann, ist die Pipettiernadel an einem Schwenkarm, der mit Hilfe eines Antriebes geschwenkt werden kann, befestigt.

Die Zentraleinheit 1 ist des Weiteren mit einer Messvorrichtung 5 zur Durchführung von ISE-Messungen ausgestattet. Hierzu wird nicht etwa ein Reaktionsgefäss mit Hilfe der Probenentnahmeeinheit 30 mit einer vorgegebenen Probenmenge abgefüllt und der Messvorrichtung 5 übergeben, sondern es wird die vorbestimmte Probenmenge direkt der Messvorrichtung 5 mit Hilfe der Probenentnahmeeinheit 30 über eine Zufuhröffnung 34 zugeführt. Nach Bedarf der durchzuführenden Messung werden Reagenzien den Reagenzgefässen 33 entnommen und ebenfalls über die Zufuhröffnung 34 der Messvorrichtung 5 übergeben. Nach Abschluss der Messungen in der Messvorrichtung 5 wird innerhalb der Messvorrichtung 5 ein Spülvorgang eingeleitet, damit in der Folge eine neue Messung durchgeführt werden kann.

Die analytischen Einheiten 7 und 8 sind identisch aufgebaut. Neben der durch die analytischen Einheiten 7 und 8 führenden Transporteinheit 6 sind ein kreisförmiger Reaktionsgefässhalter 32, welcher durch eine rotierende Antriebseinheit (in Fig. 2 nicht dargestellt) drehbar ist, und ein ebenfalls kreisförmiger Reagenzgefässhalter 31, der ebenfalls durch eine Antriebseinheit rotiert werden kann, vorgesehen, wobei zwei Transfereinheiten 40, 41 zur Positionierung jeweils eines Reaktionsgefässes unter jeweils einem Reagenzgefäss vorgesehen sind, damit eine vorgesehene Menge an Reagenz aus dem Reagenzgefäss in das Reaktionsgefäss abgegeben werden kann. In einer weiteren Ausführungsform der genannten Art werden die Transfereinheiten 40, 41 zusätzlich als Mischer eingesetzt, um die Probe nach den zugeführten Reagenzien mit diesen zu mischen.

Denkbar sind auch Ausführungsvarianten, bei denen lediglich eine Transfereinheit oder bei denen mehr als zwei Transfereinheiten zur Positionierung von Reaktionsgefässen vorgesehen sind. Darüber hinaus sind auch Varianten vorgesehen, bei denen die Reagenzgefässe anstelle der Reaktionsgefässe durch Transfereinheiten positioniert werden, oder es werden sowohl die Reaktionsgefässe als auch die Reagenzgefässe positioniert.

Die Reagenzgefässe 20 bis 23 weisen zur optimalen Ausnützung im kreisförmigen Reagenzgefässhalter 31 einen kreissegmentartigen Querschnitt auf und sind auf der Unterseite mit einer Düse zur Abgabe einer exakt dosierbaren Menge an Reagenzien als selbst dispensierendes Mittel ausgebildet. Die selbst dispensierenden Mittel als auch das Reagenzgefäss können beispielsweise gemäss der in der internationalen Anmeldung mit der Anmeldenummer PCT/CH 2004/000316 beschriebenen Art und Weise realisiert sein. Aus diesem Grund wird hiermit der ganze Offenbarungsgehalt der PCT/CH 2004/000316 als integrierender Bestanteil der vorliegenden Anmeldung erklärt.

Es wird ausdrücklich darauf hingewiesen, dass die selbst dispensierenden Mittel im vorstehend genannten Sinne bei allen beschriebenen Ausführungsvarianten zum Einsatz kommen können.

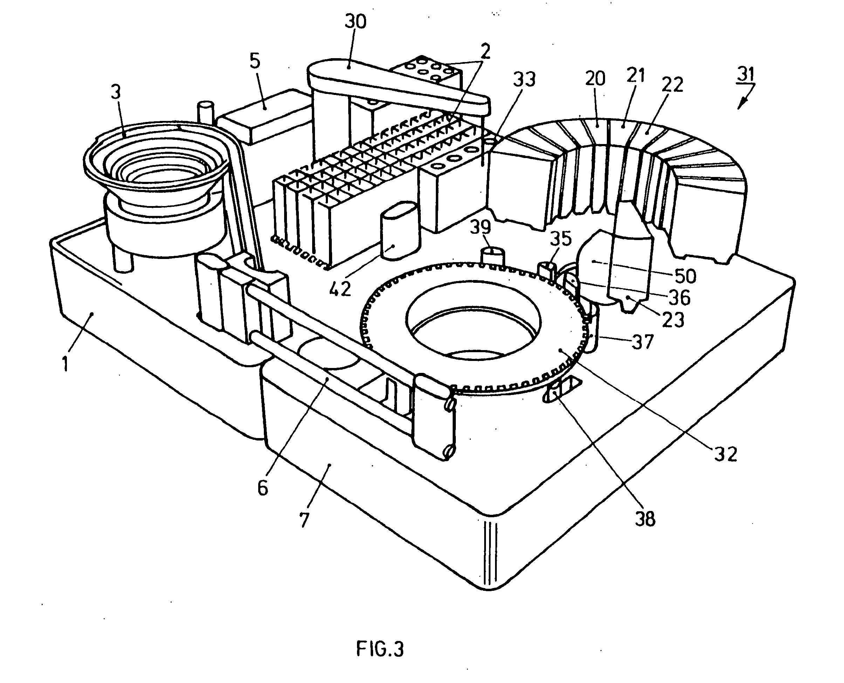

Fig. 3 zeigt eine zweite konkrete Ausführungsform der erfindungsgemässen Vorrichtung. Im Unterschied zur Ausführungsform gemäss Fig. 2 besteht die Ausführungsform gemäss Fig. 3 aus einer Zentraleinheit 1 und einer einzigen analytischen Einheit 7. Des Weiteren überlappen sich die lediglich teilweise dargestellten äusseren Umfange der beiden Halter 31 und 32 derart, dass Reagenzien aus einem der Reagenzgefässe in ein Reaktionsgefäss abgegeben werden können. Hierzu ist der Reagenzgefässhalter 31 oberhalb des Reaktionsgefässhalters 32 angeordnet.

Die Zentraleinheit 1 besteht im Wesentlichen aus den gleichen Komponenten wie die Zentraleinheit gemäss Fig. 2. Die beiden Varianten unterscheiden sich nur durch die unterschiedliche Anordnung der Komponenten und der nunmehr ersichtlichen Reinigungseinheit 42, in der die Pipettiernadel der Probenentnahmeeinheit 30 gereinigt werden kann. Die Reinigungseinheit 42 ist in der Zentraleinheit 1 angrenzend an eine Seite der analytischen Einheit 7 vorgesehen, und die Messvorrichtung 5 ist auf der gegenüberliegenden Seite angeordnet, wobei dies nicht zwingend ist. Ferner ist mit 33 ein Reagenzgefässhalter gekennzeichnet, in dem die in der Messvorrichtung 5 benötigten Reagenzien enthalten sind. Die weiterhin zentral in der Zentraleinheit 1 angeordnete Probenentnahmeeinheit 30 mit Schwenkarm und diesen antreibende Antriebseinheit hat guten Zugriff auf die Proben in den Probengefässen, auf die von der Vereinzelungseinheit 3 stammenden Reaktionsgefässe sowie auf die Reinigungseinheit 42.

Gemäss Fig. 3 können die Proben in zwei unterschiedlich grossen Probenhalter der Zentraleinheit 1 übergeben werden.

So können Probenhalter mit fünf und mit fünfzehn Proben der Zentraleinheit 1 übergeben werden.

Die analytische Einheit 7 weist wiederum einen kreisförmigen Reaktionsgefässhalter 32 und einen diesen überlagernden Reagenzgefässhalter 31 auf, in dem die kreissegmentförmigen Reagenzgefässe 20 bis 22 gehalten werden, wobei in Fig. 3 der Reagenzgefässhalter 31 und die dazugehörenden Reagenzgefässe im Überlappungsbereich der Halter 31 und 32 nicht dargestellt sind, so dass die im Überlappungsbereich liegenden weiteren Einheiten sichtbar sind. Bei den weiteren Einheiten handelt es sich zunächst um Mischeinheiten 35 und 36, um eine Leseeinheit 50, die beispielsweise zum Lesen eines Strichcodes auf einem Reagenzgefäss bzw. einem Reaktionsgefäss eingesetzt wird, und um Messeinheiten 36 bis 39, wobei die letztgenannten auch ausserhalb des Überlappungsbereiches angeordnet sein können. Die Mischeinheiten 35 und 36 werden zum Mischen der Proben in den Reaktionsgefässen verwendet, wobei die Mischeinheiten 35 und 36 insbesondere nach einer Zugabe von Reagenzien aktiviert werden. Die Mischeinheiten 35und 36 kommen zudem vorzugsweise vor der Durchführung einer Messung in einer der Messeinheiten 36 bis 39 zum Einsatz.

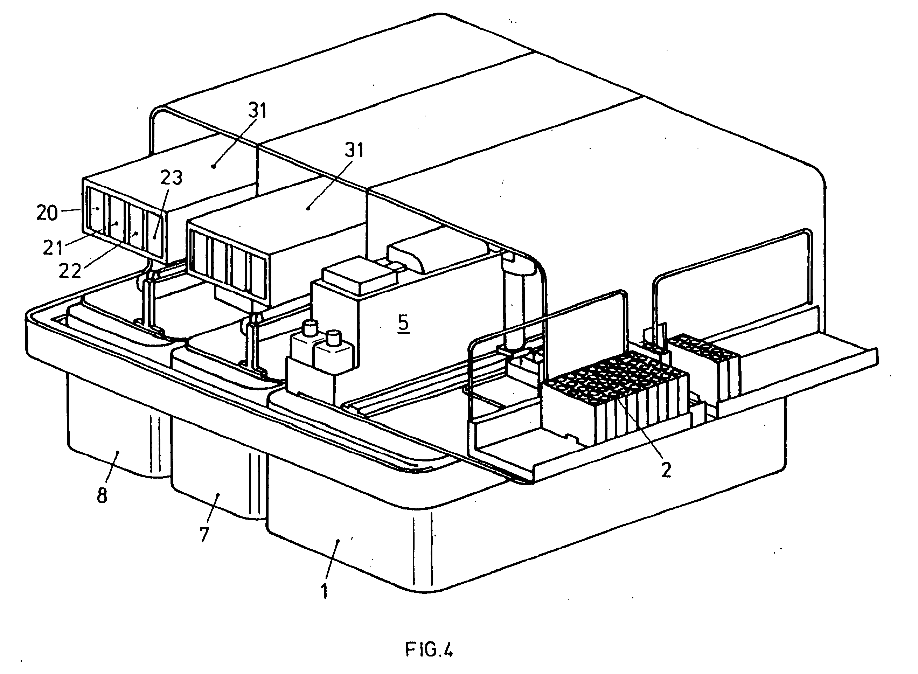

Fig. 4 zeigt eine dritte konkrete Ausführungsvariante der erfindungsgemässen Vorrichtung, die wiederum in perspektivischer Ansicht mit zum Teil aufgeschnittener Abdeckung dargestellt ist. Ersichtlich sind eine Zentraleinheit 1 in Kombination mit zwei analytischen Einheiten 7 und 8. Die Probengefässe werden in Kassetten der Zentraleinheit 1 zugeführt, wobei in einer Kassette jeweils fünf Probengefässe enthalten sind. Die Kassetten werden auf einer Seite in die Zentraleinheit 1 eingeschoben. Zur Probenentnahme ist wiederum eine Probenentnahmeeinheit (in Fig. 4 nicht dargestellt) enthalten, die die vorgegebene Probenmenge entweder in die Messvorrichtung oder in ein Reaktionsgefäss überträgt.

Die analytischen Einheiten 7 und 8 sind, im Unterschied zu denjenigen in den Ausführungsvarianten gemäss Fig. 2 und 3, nicht mit einem kreisförmigen sondern mit einem ortsfesten, rechteckigen Reagenzgefässhalter 31 ausgestattet. Soll ein Reagenz in ein Reaktionsgefäss gegeben werden, wird dieses unter die Düse des entsprechenden Reagenzgefässes mit einem Φ-R-Positioniereinheit gebracht. Danach wird das Reaktionsgefäss in gleicher Weise gegebenenfalls zu einer Messeinheit geführt.

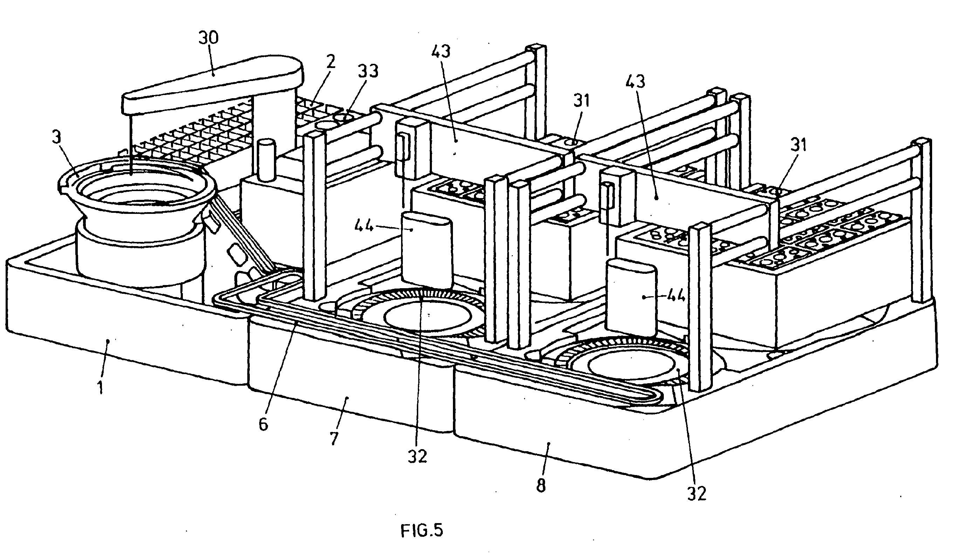

Schliesslich zeigt Fig. 5 eine vierte Ausführungsvariante der erfindungsgemässen Vorrichtung, und zwar wiederum in perspektivischer Darstellung. Aus Fig. 5 ist deutlich erkennbar, dass die analytischen Einheiten 7, 8 nunmehr eine Pipettiervorrichtung 43 aufweisen, mit Hilfe derer die Reagenzien den Reaktionsgefässen, welche in einem kreisförmigen Reaktionsgefässhalter 32 enthalten sind, zugeführt werden. Die Pipettiervorrichtung 43 ist dabei als X-Y Positioniereinheit realisiert, welche ein benötigtes Reagenz aus einem Reagenzgefäss entnimmt und in ein Reaktionsgefäss abgibt. Zwischen den einzelnen Pipettiervorgängen muss die Pipettiernadel gereinigt werden, damit ein Reagenz nicht durch ein anderes Reagenz, welches noch an der Pipettiernadel vom vorangegangenen Pipettiervorgang haftet, verunreinigt wird. Aus diesem Grund ist eine Nadelreinigungseinheit 44 vorgesehen, mit der die Pipettiernadel zwischen den Pipettiervorgängen reinigt.

Bei allen beschriebenen Ausführungsvarianten der erfindungsgemässen Vorrichtung ist es denkbar, dass in den analytischen Einheiten Temperiereinheiten vorgesehen sind, um die Temperatur der Reagenzien in den Reagenzgefässen und/oder die Temperatur der Proben in den Reaktionsgefässen auf vorbestimmte Werte einzustellen. Hierzu werden die Reagenzgefässhalter und/oder die Reaktionsgefässhalter weitestgehend so eingefasst, dass Wärmezuflüsse oder Wärmeabflüsse möglichst verhindert werden. Mithin wirkt zum Beispiel die eine Temperiereinheit lediglich auf die Reagenzgefässe, eine weitere Temperiereinheit lediglich auf die Reaktionsgefässe, wobei die Reagenzgefässe beispielsweise auf einer Temperatur von ca. 10° Celsius und die Reaktionsgefässe beispielsweise auf einer Temperatur von ca. 37° Celsius gehalten werden.

In gleicher Weise können bei allen beschriebenen Ausführungsvarianten in mindestens einer oder in allen analytischen Einheiten so genannte Probenvorbehandlungseinheiten enthalten sein, in denen beispielsweise die Abtrennung eines zellulären Anteils der Probe oder eine Extraktion, eine Separation und/oder eine Purifikation von gewissen Probenbestandteilen vorgenommen wird. Solche Probenvorbehandlungen sind zum Beispiel bei immunologischen, molekularen oder klinisch-chemische Analysen notwendig. Die Probenvorbehandlungseinheit ist vorzugsweise unmittelbar am Übergabeort eines Reaktionsgefässes an eine analytische Einheit angeordnet.

## Patentansprüche

1. Vorrichtung zum Analysieren von Proben, die in Probengefässen (2) zugeführt werden, **dadurch gekennzeichnet, dass** eine Zentraleinheit (1) mit Reaktionsgefässen, eine Transporteinheit (6) zum Transportieren der Reaktionsgefässe und mindestens eine analytische Einheit (7, 8, 9) vorgesehen sind, dass die Zentraleinheit (1) eine Probenentnahmeeinheit (30) enthält, mit der zumindest ein Teil der Probe aus einem Probengefäss (2) in ein Reaktionsgefäss überführt wird, dass zumindest ein Teil der Reaktionsgefässe über die Transporteinheit (6) an mindestens eine der analytischen Einheiten (7, 8, 9) übertragbar ist, dass in der analytischen Einheit (7, 8, 9) mindestens ein Reagenzbehälter (20, ..., 23) mit mindestens einem Reagenz vorgesehen ist, das zur Probe im Reaktionsgefäss für eine Reaktion zwischen der Probe und dem Reagenz zuführbar ist, wobei in der analytischen Einheit (7, 8, 9) diejenigen Reagenzien bereitgestellt sind, die den Proben zum Messen von physikalischen Eigenschaften zugeführt werden, und dass in der analytischen Einheit (7, 8, 9) mindestens eine Messeinheit (37, 38, 39) zum Messen der physikalischen Eigenschaften der Probe vorgesehen ist.

2. Vorrichtung nach Anspruch 1, **dadurch gekennzeichnet, dass** eine Messvorrichtung (5) in der Zentraleinheit (1) enthalten ist.

3. Vorrichtung nach Anspruch 2, **dadurch gekennzeichnet, dass** eine Ionen-Selektive-Elektrolyt-Messung in der Messvorrichtung (5) durchführbar ist, wobei die hierfür erforderlichen Reagenzien in der Zentraleinheit (1) bereitgestellt sind.

4. Vorrichtung nach einem der vorangehenden Ansprüche, **dadurch gekennzeichnet, dass** in der analytischen Einheit (7, 8, 9) diejenigen Reagenzien bereitgestellt sind, die den Proben zum Messen einer physikalischen Eigenschaft zugeführt werden, zu deren Bestimmung die Messeinheit (37, 38, 39) verwendbar ist.

5. Vorrichtung nach einem der vorangehenden Ansprüche, **dadurch gekennzeichnet, dass** die Reagenzien in einzelnen Reagenzienbehältern (20, ..., 23) oder in Kassetten mit mindestens einem Reagenzienbehälter bereitgestellt sind.

6. Vorrichtung nach Anspruch 5, **dadurch gekennzeichnet, dass** die Kassetten selbst dispensierende Mittel zum Abgeben von Reagenzien aufweisen, wobei für jeden Reagenzienbehälter ein selbst dispensierendes Mittel vorgesehen ist.

7. Vorrichtung nach einem der vorangehenden Ansprüche, **dadurch gekennzeichnet, dass** die Reaktionsgefässe vom Typ Einwegreaktionsgefäss sind.

8. Vorrichtung nach einem der vorangehenden Ansprüche, **dadurch gekennzeichnet, dass** die Transporteinheit (6) die Reaktionsgefässe nur in einer Richtung, nämlich von der Zentraleinheit (1) zu einer der analytischen Einheiten (7, 8, 9), transportiert.

9. Vorrichtung nach einem der vorangegangenen Ansprüche, **dadurch gekennzeichnet, dass** in der Zentraleinheit (1) eine Vereinzelungseinheit (3) vorgesehen ist, in der die Reaktionsgefässe bereitgestellt werden.

10. Vorrichtung nach einem der vorangegangenen Ansprüche, **dadurch gekennzeichnet, dass** die Reaktionsgefässe und/oder Reagenzgefässe identifizierbar sind, wobei zur Identifikation eine oder mehrere der folgenden Technologien zur Anwendung kommt:
- ein- oder mehrdimensionale Strichcode;
- andere optische Verfahren;
- Transponder;
- Markierungsmoleküle in der Flüssigkeit.

11. Vorrichtung nach Anspruch 10, **dadurch gekennzeichnet, dass** in den analytischen Einheiten (7, 8, 9) Identifikationseinheiten zur Identifikation der Reaktionsgefässe und/oder Reagenzgefässe vorgesehen sind.

12. Vorrichtung nach einem der vorangehenden Ansprüche, **dadurch gekennzeichnet, dass** die analytischen Einheiten (7, 8, 9) Temperiereinheiten zur Einstellung einer Temperatur der Reagenzien aufweisen.

13. Vorrichtung nach einem der vorangehenden Ansprüche, **dadurch gekennzeichnet, dass** die analytischen Einheiten (7, 8, 9) weitere Temperiereinheiten zur Einstellung einer Temperatur der in den Reaktionsgefässen enthaltenen Proben aufweisen.

14. Vorrichtung nach einem der vorangehenden Ansprüche, **dadurch gekennzeichnet, dass** lediglich die Zentraleinheit (1) mit Wasser versorgt wird.

15. Vorrichtung nach einem der vorangehenden Ansprüche, **dadurch gekennzeichnet, dass** die mindestens eine analytische Einheit (7, 8, 9) eine Mischeinheit (35, 36) zum Mischen der Probe mit den verabreichten Reagenzien aufweist.

16. Vorrichtung nach einem der vorangehenden Ansprüche, **dadurch gekennzeichnet, dass** eine Reinigungsvorrichtung (42) zum Reinigen der Probenentnahmevorrichtung (30) in der Zentraleinheit (1) vorgesehen ist.

17. Vorrichtung nach einem der vorangehenden Ansprüche, **dadurch gekennzeichnet, dass** die Probenentnahmevorrichtung (30) eine Pipettiervorrichtung ist.

18. Vorrichtung nach einem der vorangegangenen Ansprüche, **dadurch gekennzeichnet, dass** in der Zentraleinheit (1) und/oder in der mindestens einen der analytischen Einheit (7, 8, 9) eine Probenvorbehandlungseinheit enthalten ist.

## Claims

1. Device for analyzing samples, which are supplied in sample vessels (2), **characterized in that** a central unit (1) with reaction vessels, a transport unit (6) for the transporting of the reaction vessels and at least one analytical unit (7,8,9) are provided, that the central unit (1) includes a sampling unit (30), by which at least a part of the sample is transferred from a sample vessel (2) into a reaction vessel, that at least a part of the reaction vessels is transferable to at least one of the analytical units (7,8,9) via the transport unit (6), that at least one reagent vessel (20,...,23) with at least one reagent is provided in the analytical unit (7,8,9), which reagent is supplied to the sample in the reaction vessel for a reaction between the sample and the reagent, whereby those reagents are provided in the analytical unit (7,8,9) which are supplied to the samples for measuring physical properties, and that at least one measuring device (5) or at least one measuring unit (37,38,39) for the measuring of a physical property of the sample is provided in said analytical unit (7,8,9).

2. Device according to claim 1, **characterized in that** the measuring device (5) is included in the central unit (1).

3. Device according to claim 2, **characterized in that** an ion-selective-electrolyte measurement is performable in the measuring device (5), the reagents required therefore being provided in the central unit (1).

4. Device according to one of the preceding claims, **characterized in that** those reagents are provided in the analytical unit (7,8,9) which are supplied to the samples for measuring a physical property, for which determination the measuring unit (37,38,39) is usable.

5. Device according to one of the preceding claims, **characterized in that** the reagents are provided in single reagent vessels (20,...,23), or in cassettes with at least one reagent vessel.

6. Device according to claim 5, **characterized in that** the cassettes have self dispensing means for the dispensing of reagents, a self dispensing means being provided for each reagent vessel.

7. Device according to one of the preceding claims, **characterized in that** the reaction vessels are of the type one way reaction vessel.

8. Device according to one of the preceding claims, **characterized in that** the transport unit (6) transports the reaction vessels only in one direction, namely from the central unit (1) to one of the analytical units (7,8,9).

9. Device according to one of the preceding claims, **characterized in that** a separation unit (3) is provided in the central unit (1), in which separation unit the reaction vessels are provided.

10. Device according to one of the preceding claims, **characterized in that** the reaction vessels and/or reagent vessels are identifiable, whereby for the identification one or more of the following technologies are being used:
- one- or more dimensional bar codes;
- other optical methods;
- transponder;
- marking molecules in the liquid.

11. Device according to claim 10, **characterized in that** identification units for the identification of the reaction vessels and/or the reagent vessels are provided in the analytical units (7,8,9).

12. Device according to one of the preceding claims, **characterized in that** the analytical units (7,8,9) have heating units for adjusting a temperature of the reagents.

13. Device according to one of the preceding claims, **characterized in that** the analytical units (7,8,9) have further heating units for adjusting a temperature of the samples contained in the reaction vessels.

14. Device according to one of the preceding claims, **characterized in that** only the central unit (1) is supplied with water.

15. Device according to one of the preceding claims, **characterized in that** the at least one analytical unit (7,8,9) has a mixing unit (35,36) for the mixing of the sample with the supplied reagents.

16. Device according to one of the preceding claims, **characterized in that** a cleaning unit (42) for cleaning the sampling unit (30) is provided in the central unit (1).

17. Device according to one of the preceding claims, **characterized in that** the sampling unit (30) is a pipette unit.

18. Device according to one of the preceding claims, **characterized in that** a sample pre-treatment unit is included in the central unit (1) and/or in the at least one analytical unit (7,8,9).

## Revendications

1. Dispositif d'analyse d'échantillons qui sont amenés dans des récipients à échantillons (2), **caractérisé en ce qu'**il est prévu une unité centrale (1) avec des récipients à réaction, une unité de transport (6) pour le transport des récipients à réaction et au moins une unité analytique (7,8,9), ladite unité centrale (1) comprenant une unité de prélèvement d'échantillons (30) servant à transférer au moins une partie de l'échantillon d'un récipient d'échantillon (2) dans un récipient à réaction, **en ce qu'**au moins une partie des récipients à réaction peut être transférée au moyen de l'unité de transport (6) à au moins une des unités analytiques (7,8,9), cette unité analytique (7,8,9) comprenant au moins un récipient à réactifs (20,...,23) contenant au moins un réactif destiné à être ajouté à l'échantillon dans le récipient à réaction en vue d'une réaction entre l'échantillon et le réactif et l'unité analytique (7,8,9) étant approvisionnée des réactifs qui seront à alimenter aux échantillons pour la mesure de caractéristiques physiques, et **en ce que** l'unité analytique (7,8,9) comprend au moins une unité de mesure (37,38,39) pour mesurer les caractéristiques physiques de l'échantillon.

2. Dispositif selon la revendication 1, **caractérisé en ce que** l'unité centrale (1) contient un dispositif de mesure (5).

3. Dispositif selon la revendication 2, **caractérisé en ce** ledit dispositif de mesure (5) peut servir à la mesure sélective d'ions d'électrolyte, les réactifs nécessaires pour cette opération étant mis à disposition dans l'unité centrale (1).

4. Dispositif selon l'une des revendications précédentes, **caractérisé par** une unité analytique (7,8,9) approvisionnée des réactifs qui sont alimentés aux échantillons pour mesurer une caractéristique physique dont la détermination peut se faire au moyen de l'unité de mesure (37,38,39).

5. Dispositif selon l'une des revendications précédentes, **caractérisée en ce que** les réactifs sont mis à disposition dans des récipients à réactifs (20,...,23) ou dans des cassettes avec au moins un récipient à réactifs.

6. Dispositif selon la revendication 5, **caractérisé en ce que** les cassettes comprennent des moyens autodélivrants pour délivrer des réactifs, chaque récipient à réactifs ayant son propre moyen autodélivrant.

7. Dispositif selon l'une des revendications précédentes, **caractérisé en ce que** les récipients à réaction sont du type récipients à jeter.

8. Dispositif selon l'une des revendications précédentes, **caractérisé en ce que** l'unité de transport (6) ne transporte les récipients à réaction que dans une direction, notamment de l'unité centrale (1) à une des unités analytiques (7,8,9).

9. Dispositif selon l'une des revendications précédentes, **caractérisé en ce que** l'unité centrale (1) est équipée d'une unité de séparation (3) dans laquelle sont mises à disposition les récipients à réaction.

10. Dispositif selon l'une des revendications précédentes, **caractérisé en ce que** les récipients à réaction et/ou les récipients à réactifs sont identifiables, l'identification se faisant en application d'une ou de plusieurs des technologies suivantes :
- code à bâtonnets à une ou plusieurs dimensions;
- autres procédés optiques ;
- transpondeur ;
- molécules de marquage dans le liquide.

11. Dispositif selon la revendication 10, **caractérisé par** des unités d'identification dans les unités analytiques (7,8,9) pour identifier les récipients à réaction et/ou les récipients à réactifs.

12. Dispositif selon l'une des revendications précédentes, **caractérisé en ce que** les unités analytiques (7,8,9) comprennent des unités de chauffage prévues pour régler la température des réactifs.

13. Dispositif selon l'une des revendications précédentes, **caractérisé en ce que** les unités analytiques (7,8,9) comprennent en outre des unités de chauffage pour régler la température des échantillons dans les récipients à réaction.

14. Dispositif selon l'une des revendications précédentes, **caractérisé en ce qu'**uniquement l'unité centrale (1) est alimentée en eau.

15. Dispositif selon l'une des revendications précédentes, **caractérisé en ce que** ladite au moins une unité analytique (7,8,9) comprend une unité mélangeur (35,36) pour mélanger l'échantillon avec les réactifs fournis.

16. Dispositif selon l'une des revendications précédentes, **caractérisé par** un dispositif de nettoyage (42) pour nettoyer le dispositif de prélèvement d'échantillons (30) dans l'unité centrale.

17. Dispositif selon l'une des revendications précédentes, **caractérisé en ce que** le dispositif de prélèvement d'échantillons (30) est un appareil à pipetter.

18. Dispositif selon l'une des revendications précédentes, **caractérisé par** une unité de traitement préalable d'échantillons est prévue dans l'unité centrale (1) et/ou dans ladite au moins une unité analytique (7,8,9).
